# EUROPÄISCHE PATENTSCHRIFT

(11) **EP 1 657 090 B1**
(45) Veröffentlichungstag und Bekanntmachung des Hinweises auf die Patenterteilung: **12.01.2011**
(21) Anmeldenummer: 05024814.5
(22) Anmeldetag: 14.11.2005
(51) Int. Cl.: B60H 1/00

(54) **Klimaanlage mit Kältespeicher**
Air conditioner with cold accumulator
Climatiseur avec accumulateur de froid

(30) Priorität: 16.11.2004 DE 102004055343
(43) Veröffentlichungstag der Anmeldung: 17.05.2006
(73) Patentinhaber: Behr GmbH & Co. KG, 70469 Stuttgart (DE)
(72) Erfinder: Burk, Roland, Dipl.-Phys., 70469 Stuttgart (DE); Dürr, Gottfried, Dipl.-Ing., 70437 Stuttgart (DE); Feuerecker, Günther, Dr. rer. nat., 70567 Stuttgart (DE); Kohl, Michael, Dipl.-Ing., 74321 Bietigheim (DE); Manski, Ralf, Dipl.-Ing., 70197 Stuttgart (DE); Strauss, Thomas, Dipl.-Ing. (FH), 73274 Notzingen (DE)
(74) Vertreter: Grauel, Andreas

(56) Entgegenhaltungen:
- WO-A-02/090848
- DE-A1- 19 615 511
- JP-A- 2000 205 777

## Beschreibung

Die Erfindung betrifft eine Klimaanlage mit Kältespeicher für ein Kraftfahrzeug gemäß dem Oberbegriff des Anspruches 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstehen kann.

In der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Teilbereich einzeln oder durch beide Teilbereiche gemeinsam leitbar ist. Der Kältemittelspeicher ist hierbei über die gesamte Tiefe des Verdampfers ausgebildet, wobei er zwischen Flachrohren und Wellrippen angeordnet ist. Entsprechende Klimaanlagen lassen jedoch noch Wünsche offen.

JP 2000 20 5777 zeigt eine Klimaanlage gemäß Oberbegriff des Anspruchs 1.

Ausgehend von diesem Stand der Technik ist es Aufgabe der Erfindung eine verbesserte Klimaanlage zur Verfügung zu stellen. Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage für ein Kraftfahrzeug vorgesehen mit einem Verdampfer, welcher zum Abkühlen von zu konditionierender Luft für den Innenraum dient, wobei ein in einem Kältespeicher enthaltenes Kältespeichermedium vorgesehen ist, wobei der Kältespeicher im Bereich mindestens eines Sammelkastens und/oder von Kältemittel-Leitungen, die am Verdampfer vorgesehen sind und der Kältemittelversorgung des Verdampfers dienen, angeordnet ist. Die Anbringung - im Gegensatz zum Stand der Technik - auf mindestens einer Außenseite des Verdampfers, die nicht im Weg der Luftströmung liegt, ermöglicht eine strömungstechnisch optimierte Ausgestaltung. Bevorzugt sind hierbei die normalen Verdampfer und die Verdampfer mit Kältespeicher gleich ausgebildet, so dass die Herstellungskosten relativ gering sind. Ferner ist eine nachträgliche Ausrüstung einfach möglich.

Erfindungsgemäß ist das Kältespeicherelement sich in Längsrichtung erstreckend in einem Mittelbereich zwischen zwei benachbarten Teilen eines zweiteiligen Sammelkastens angeordnet. Das Kältespeicherelement ist bevorzugt in flächiger Anlage an den Sammelkasten.

Beim Verdampfer handelt es sich bevorzugt um einen mindestens zweireihigen Verdampfer

Das Kältespeicherelement besteht bevorzugt aus Aluminium, insbesondere innen und/oder außen beschichtetem Aluminium, Kupfer, einer Kupfer-ZinkLegierung, Kunstharz oder Kunststoff. Ein Aluminium-Behälter hat den Vorteil, dass er sich mit den übrigen Teilen des Verdampfers verlöten lässt.

Das Kältespeicherelement ist bevorzugt mit dem Verdampfer verlötet. Dies ermöglicht eine einfache Herstellung des Verdampfers, wobei das Verlöten mit dem herkömmlichen Verlöten des Verdampfers erfolgt. Das Verlöten hat neben den Vorteilen in Hinblick auf die Herstellung auch Vorteile in Hinblick auf den Wärmeübergang zwischen den mit Hilfe des Lots verbundenen Bereichen des Verdampfers und des Kältespeicherelements. Die Anbringung kann alternativ auch lösbar erfolgen, wobei vorzugsweise eine Wärmeleitpaste die Wärmeübertragung verbessert.

Ferner können auf der Innenseite, d.h. in Kontakt mit dem Kältespeichermedium, Beschichtungen zur Begünstigung der Kristallbildung beim Erstarren aufgebracht sein, so dass keine zusätzlichen Kristallbildner im Kältespeichermedium benötigt werden. Eine Innenbeschichtung schützt zudem den Behälterwerkstoff vor Korrosion durch das Kältespeichermedium. Ebenfalls möglich sind Außenbeschichtungen.

Beim Speichermedium handelt es sich bevorzugt um ein PCM-Material (phase change material), das bevorzugt kongruent schmelzende Medien, insbesondere Decanol, Tetra-, Penta- oder Hexadecan, LiClO₃ 3H₂O, wässrige Salzlösungen oder organische Hydrate enthält oder hieraus gebildet ist. Im Speichermedium können auch Keimbildner vorgesehen sein, welche die Kristallbildung beschleunigen.

Die Phasenumwandlungstemperatur des Speichermediums liegt vorzugsweise in einem Bereich von 0°C bis 30°C, insbesondere von 2°C bis 15°C, insbesondere bevorzugt von 4°C bis 12°C.

Im Inneren des Kältespeicherelements können Einlagen, wie Wellrippenbleche, vorzugsweise aus Aluminium, jedoch sind auch andere Metalle oder Kunststoffe geeignet, oder andere Turbulenzeinlagen, wie Vliese oder Gestricke, bspw. aus Kunststoff oder Metall, oder Schäume, bspw. Metallschäume oder Kunststoffschäume, vorgesehen sein. Die Einlagen dienen unter Umständen einer Erhöhung der Festigkeit des Speicherelementes, einer Vergrößerung der wärmeleitenden Kontaktfläche und/oder einer Verkürzung der Wärmeleitwege zwischen dem Speichermedium und der Behälterwand.

Im Folgenden wird die Erfindung anhand mehrerer Ausführungsbeispiele mit Varianten unter Bezugnahme auf die Zeichnung im Einzelnen erläutert. Es zeigen:

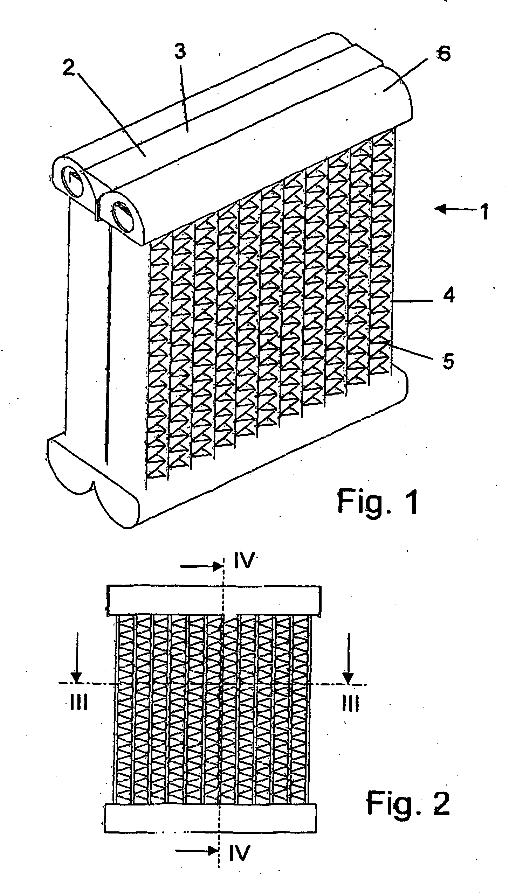

- Fig. 1: eine perspektivische Ansicht eines Verdampfers mit einem Kältespeicher gemäß dem ersten Ausführungsbeispiel,
- Fig. 2: eine Seitenansicht des Verdampfers von Fig. 1,
- Fig. 3: einen Schnitt entlang Linie III-III in Fig. 2,
- Fig. 4: einen Schnitt entlang Linie VI-VI in Fig. 2,
- Fig. 5: einen Schnitt quer durch einen Verdampfer gemäß dem zweiten Ausführungsbeispiel,
- Fig. 6: eine geschnittene Seitenansicht des Verdampfers von Fig. 5,
- Fig. 7: eine perspektivische geschnittene Explosionsdarstellung des Verdampfer von Fig. 5,
- Fig. 8: einen Schnitt quer durch einen Verdampfer gemäß dem drit- ten Ausführungsbeispiel,
- Fig. 9: eine perspektivische geschnittene Explosionsdarstellung des Verdampfer von Fig. 8, und
- Fig. 10: einen Schnitt quer durch einen Verdampfer gemäß dem vier- ten Ausführungsbeispiel.

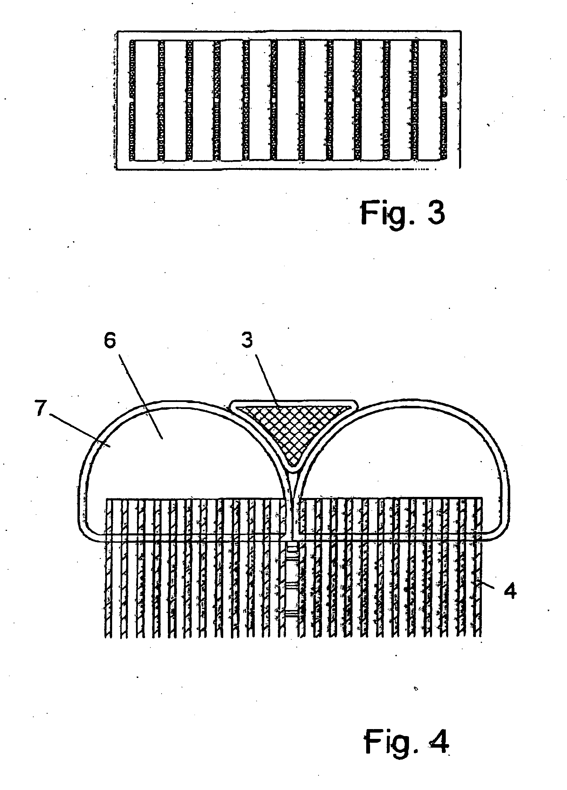

Eine Kraftfahrzeug-Klimaanlage zum Temperieren des Kraftfahrzeug-Innenraums mit einem Kältemittel-Kreislauf, von der nur der Verdampfer 1 dargestellt ist, weist, um auch bei einem Motorstopp zumindest über einen kurzen Zeitraum eine ausreichende Kühlleistung zur Verfügung zu stellen, einen Kältespeicher 2 bestehend aus einem Kältespeicherelement 3, welches mit einem Kältespeichermedium gefüllt ist, auf. Das Kältespeicherelement 3 ist durch einen Kunststoff-Behälter gebildet, so dass als Kältespeichermedien auch aggressive Medien, die nicht in Metall-Behälter gefüllt werden können, verwendet werden können. Als Kältespeichermedium, das in Fig. 4 durch eine gekreuzte Schraffur dargestellt ist, dient vorliegend Tetra-, Penta- oder Hexadecan.

Der Verdampfer 1 weist einen im Wesentlichen herkömmlichen Aufbau mit zwei Reihen von Flachrohren 4 und dazwischen angeordneten Wellrippen 5 auf, die beidseitig in Sammelkästen 6 enden. Die Sammelkästen 6 weisen einen Querschnitt mit zwei U-förmigen Rinnen 7 auf (vgl. Fig. 4). Das Kältespeicherelement 3 ist am oberen Sammelkasten 6 im Bereich zwischen den beiden Rinnen 7 angeordnet, wobei in seiner Gestalt an die Rinnen 7 angepasst ist und oben in etwa gleicher Höhe mit den Rinnen 7 mit einer ebenen Fläche endet, so dass es einen etwa dreieckigförmigen Querschnitt aufweist.

Die Verdampferrohre 4 weisen auf der Innenseite, das heißt auf der mit dem Kältespeichermedium in Kontakt stehenden Seite, Mikrostrukturen auf. Diese wurden beispielsweise mittels Aufprägen ausgebildet. So kann das Kältemittel des Verdampfers 1 nahezu vollständig in den kältemittelführenden Flachrohren 4 verdampfen und in den Sammelkästen 6, an welchen das Kältespeicherelement 3 angebracht ist, wieder kondensieren. Die Mikrostrukturen ermöglichen eine Erhöhung der übertragbaren Wärmeleistung.

Im Inneren des durchgehenden Hohlraums des Kältespeicherelements 3 sind gemäß einer nicht in der Zeichnung dargestellten Variante Elemente zur Verhinderung einer Strömungsausbildung und/oder zur Verbesserung des thermischen Kontaktes zwischen dem Speichermedium und der Behälterwand vorgesehen. Derartige Elemente können als Rippenbleche, Drahtgestricke, Metallschäume, Vliese und dergleichen ausgebildet sein.

Gemäß einer Variante besteht das Kältespeicherelement aus mit einem Kältespeichermedium gefüllten Aluminiumbehälter, die Gestalt entspricht dem des ersten Ausführungsbeispiels, welcher mit dem Verdampfer mitgelötet wird, d.h. es handelt sich hierbei um einen integrierten, fest mit dem Verdampfer verbundenen Kältespeicher. Hierbei ist der Wärmekontakt auf Grund der Lötverbindung besser als der beim zuvor beschriebenen Ausführungsbeispiel, selbst bei Verwendung einer Wärmeleitpaste. Der Aluminiumbehälter kann auf seiner Außen- und/oder Innenseite zusätzlich beschichtet sein.

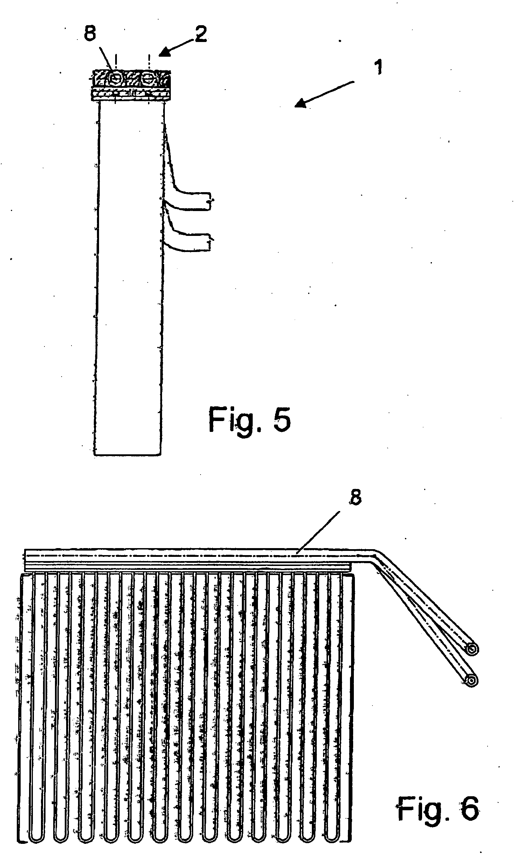

Die Figuren 5 bis 7 zeigen einen zweireihigen Verdampfer 1 entlang dessen Oberseite das Kältemittel zu- und abführende Leitungen 8 angeordnet sind. Im Bereich dieser Leitungen 8 sind vorliegend drei mit einem Kältespeichermedium gefüllte Kältespeicherelemente 3, welche den Kältespeicher 2 bilden, vorgesehen. Hierbei sind die Kältespeicherelemente 3 abwechselnd mit den Leitungen 8 auf der Verdampferseite angebracht, wobei die Höhe der Kältespeicherelemente 3 etwa durch die Höhe der Leitungen 8 bestimmt ist, so dass kein zusätzlicher Bauraum erforderlich ist. Die Kältespeicherelemente 3 sind in ihrer Gestalt an die Leitungen 8 angepasst, so dass eine möglichst große Kontaktfläche zwischen den Kältespeicherelementen 3 und den Leitungen 8 gegeben ist. Vorliegend bestehen die Kältespeicherelemente 3 aus Aluminium und sind mit dem Verdampfer 1 und den Leitungen 8 fest verlötet.

Gemäß einer Variante bestehen die Kältespeicherelemente aus mit einem Kältespeichermedium gefüllten Kunststoff, so dass die Anbringung der Kältespeicherelemente erst nach dem Lötvorgang erfolgen kann.

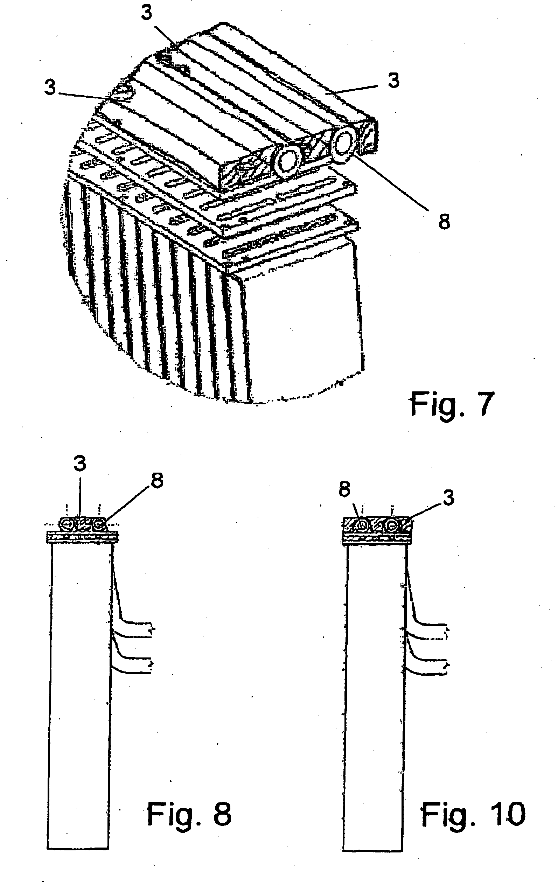

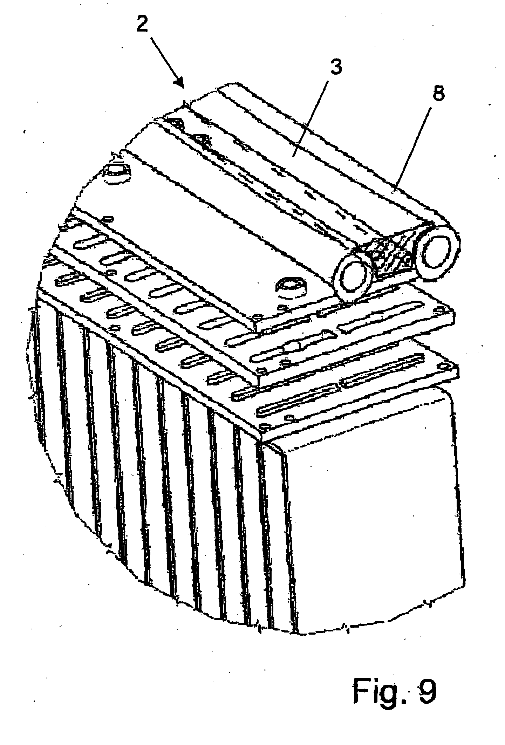

Gemäß dem in den Figuren 8 und 9 dargestellten dritten Ausführungsbeispiel entfallen die seitlichen Kältespeicherelemente des zweiten Ausführungsbeispiels und es ist ausschließlich das mittlere Kältespeicherelement 3 zwischen den Leitungen 8 angeordnet vorgesehen.

Fig. 10 zeigt ein viertes Ausführungsbeispiel, gemäß dem das Kältespeicherelement 3 mehrgliedrig seitlich von und zwischen den Leitungen 8 angeordnet ausgebildet ist, wobei es einer verbundenen Ausgestaltung des Kältespeichers 2 gemäß dem zweiten Ausführungsbeispiel entspricht.

## Patentansprüche

1. Klimaanlage mit Kältespeicher (2) bestehend aus einem Kältespeicherelement (3) für ein Kraftfahrzeug mit einem Kältemittelkreislauf, der einen Verdampfer (1), welcher zum Abkühlen von zu konditionierender Luft für einen Innenraum insbesondere des Kraftfahrzeugs dient, enthält wobei ein in einem Kältespeicher (2) enthaltenes Kältespeichermedium vorgesehen ist, wobei der Kältespeicher (2) im Bereich mindestens eines Sammelkastens (6) und/oder von Kältemittel-Leitungen, die am Verdampfer (1) vorgesehen sind und der Kältemittelversorgung des Verdampfers dienen, angeordnet ist, **dadurch gekennzeichnet dass** das Käftespeicherelement (3) in Längsrichtung erstreckend in einem Mittelbereich zwischen zwei benachbarten Teilen eines zweiteiligen Sammelkastens (6) angeordnet ist.

2. Klimaanlage nach Anspruch 1, **dadurch gekennzeichnet, dass** der Verdampfer (1) ein mehrreihiger Verdampfer ist.

3. Klimaanlage nach einem der vorhergehenden Ansprüche, **dadurch gekennzeichnet, dass** das Kältespeicherelement (3) einen annähernd dreieckigen Querschnitt aufweist, wobei das Kältespeicherelement (3) mit zwei Seiten in flächiger Anlage an mindestens einem Sammelkasten (6) ist.

4. Klimaanlage nach einem der vorhergehenden Ansprüche, **dadurch gekennzeichnet, dass** der Sammelkasten (6) mehrteilig ausgebildet ist, wobei jeder Teil einen Querschnitt mit einer U-förmigen Rinne (7) aufweist und das Kältespeicherelement (3) zwischen zwei U-förmigen Rinnen (7) angeordnet ist.

5. Klimaanlage nach einem der vorhergehenden Ansprüche, **dadurch gekennzeichnet, dass** das Kältespeicherelement (3) an dem Verdampfer (1) und/oder mindestens an einer Kältemittel-Zu- oder -Ableitung (8) des Verdampfers (1) angebracht, insbesondere angeclipst, ist.

6. Klimaanlage nach einem der vorhergehenden Ansprüche, **dadurch gekennzeichnet, dass** das Kältespeicherelement (3) mit dem Verdampfer (1) und/oder mindestens einer Kältemittel-Zu- oder -Ableitung (8) des Verdampfers (1) verlötet ist.

7. Klimaanlage nach einem der vorhergehenden Ansprüche, **dadurch gekennzeichnet, dass** das Kältespeicherelement (3) aus Aluminium, insbesondere beschichtetem Aluminium, besteht.

8. Klimaanlage nach einem der vorhergehenden Ansprüche, **dadurch gekennzeichnet, dass** das Kältespeicherelement (3) eine Beschichtung, insbesondere eine Innenbeschichtung zur Unterstützung der Keimbildung, aufweist.

9. Klimaanlage nach einem der vorhergehenden Ansprüche, **dadurch gekennzeichnet, dass** das Kältespeichermedium durch ein PCM-Material gebildet ist.

10. Klimaanlage nach Anspruch 9 **dadurch gekennzeichnet, dass** die Phasenumwandlungstemperatur des Speichermediums (3) in einem Bereich von 0°.C bis 30°C, insbesondere von 2°C bis 15°C, insbesondere bevorzugt von 4°C bis 12°C, liegt.

11. Klimaanlage nach einem der vorhergehenden Ansprüchen, **dadurch gekennzeichnet, dass** das Kältespeicherelement (3) eine Innenfläche mit Mikrostrukturen aufweist.

12. Klimaanlage nach einem der vorhergehenden Ansprüche, **dadurch gekennzeichnet, dass** im Kältespeicherelement mindestens eine Einlage angeordnet ist.

## Claims

1. An air-conditioning system comprising a cold accumulator (2) composed of a cold accumulator element (3) for a motor vehicle having a refrigerant circuit which includes an evaporator (1) for cooling the air to be conditioned for an interior compartment, in particular of the motor vehicle, wherein a cold accumulator medium contained in a cold accumulator (2) is provided, the cold accumulator (2) being disposed in the region of at least one collecting tank (6) and/or refrigerant lines that are provided on the evaporator (1) and are used to supply refrigerant to the evaporator, **characterized in that** the cold accumulator element (3) is disposed, extending in the longitudinal direction, in a central region between two adjacent parts of a two-component collecting tank (6).

2. The air-conditioning system according to 1, **characterized in that** the evaporator (1) is a multiple-row evaporator.

3. The air-conditioning system according to one of the preceding claims, **characterized in that** the cold accumulator element (3) has an approximately triangular cross section, and the cold accumulator element (3) bears via two sides in a planar manner against at least one collecting tank (6).

4. The air-conditioning system according to one of the preceding claims, **characterized in that** the collecting tank (6) is composed of multiple parts, each part having a cross section with a U-shaped groove (7), and the cold accumulator element (3) being disposed between two U-shaped grooves (7).

5. The air-conditioning system according to one of the preceding claims, **characterized in that** the cold accumulator element (3) is mounted, in particularly being clipped, on the evaporator (1) and/or at least on a refrigerant supply or discharge line (8) of the evaporator (1).

6. The air-conditioning system according to one of the preceding claims, **characterized in that** the cold accumulator element (3) is soldered to the evaporator (1) and/or at least one refrigerant supply or discharge line (8) of the evaporator (1).

7. The air-conditioning system according to one of the preceding claims, **characterized in that** the cold accumulator element (3) is composed of aluminum, in particular coated aluminum.

8. The air-conditioning system according to one of the preceding claims, **characterized in that** the cold accumulator element (3) has a coating, in particular an inner coating that supports nucleation.

9. The air-conditioning system according to one of the preceding claims, **characterized in that** the cold accumulator medium is formed by a PCM material.

10. The air-conditioning system according to claim 9, **characterized in that** the phase-transition temperature of the accumulator medium (3) lies in a range of 0°C to 30°C, in particular 2°C to 15°C, and particularly preferably 4°C to 12°C.

11. The air-conditioning system according to one of the preceding claims, **characterized in that** the cold accumulator element (3) has an inner surface with microstructures.

12. The air-conditioning system according to one of the preceding claims, **characterized in that** at least one insert is disposed in the cold accumulator element.

## Revendications

1. Système de climatisation comprenant un accumulateur de froid (2) se composant d'un élément d'accumulateur de froid (3) pour un véhicule automobile équipé d'un circuit de fluide frigorigène qui comporte un évaporateur (1) qui sert au refroidissement d'air à conditionner pour un habitacle, en particulier du véhicule automobile, où il est prévu un milieu d'accumulateur de froid contenu dans un accumulateur de froid (2), où l'accumulateur de froid (2) est disposé dans la zone d'au moins un bac collecteur (6) et / ou de conduites de fluide frigorigène qui sont prévues sur l'évaporateur (1) et servent à l'alimentation de l'évaporateur, en fluide frigorigène, **caractérisé en ce que** l'élément d'accumulateur de froid (3), s'étendant dans le sens longitudinal, est disposé dans une zone centrale comprise entre deux parties adjacentes d'un bac collecteur (6) en deux parties.

2. Système de climatisation selon la revendication 1, **caractérisé en ce que** l'évaporateur (1) est un évaporateur à plusieurs rangées.

3. Système de climatisation selon l'une ou l'autre des revendications précédentes, **caractérisé en ce que** l'élément d'accumulateur de froid (3) présente une section presque triangulaire, où l'élément d'accumulateur de froid (3), par deux côtés, est en appui sur toute la surface d'au moins un bac collecteur (6).

4. Système de climatisation selon l'une quelconque des revendications précédentes, **caractérisé en ce que** le bac collecteur (6) est configuré en plusieurs parties, où chaque partie présente une section comportant un conduit (7) en forme de U, et l'élément d'accumulateur de froid (3) est disposé entre deux conduits (7) en forme de U.

5. Système de climatisation selon l'une quelconque des revendications précédentes, **caractérisé en ce que** l'élément d'accumulateur de froid (3) est fixé, en particulier clipsé, sur l'évaporateur (1) et / ou au moins sur une conduite d'alimentation ou d'évacuation de fluide frigorigène (8) de l'évaporateur (1).

6. Système de climatisation selon l'une quelconque des revendications précédentes, **caractérisé en ce que** l'élément d'accumulateur de froid (3) est brasé avec l'évaporateur (1) et / ou au moins avec une conduite d'alimentation ou d'évacuation de fluide frigorigène (8) de l'évaporateur (1).

7. Système de climatisation selon l'une quelconque des revendications précédentes, **caractérisé en ce que** l'élément d'accumulateur de froid (3) est en aluminium, en particulier en aluminium prélaqué.

8. Système de climatisation selon l'une quelconque des revendications précédentes, **caractérisé en ce que** l'élément d'accumulateur de froid (3) présente un revêtement, en particulier un revêtement intérieur pour favoriser la formation de germes cristallins.

9. Système de climatisation selon l'une quelconque des revendications précédentes, **caractérisé en ce que** le milieu d'accumulateur de froid est formé par un matériau à changement de phase (PCM).

10. Système de climatisation selon la revendication 9, **caractérisé en ce que** la température de changement de phase du milieu de l'accumulateur de froid (3) se situe dans une plage comprise entre 0°C et 30°C, en particulier entre 2°C et 15°C, en particulier de préférence entre 4°C et 12°C.

11. Système de climatisation selon l'une quelconque des revendications précédentes, **caractérisé en ce que** l'élément d'accumulateur de froid (3) présente une surface intérieure à microstructures.

12. Système de climatisation selon l'une quelconque des revendications précédentes, **caractérisé en ce qu'**au moins un élément intercalaire est disposé dans l'élément d'accumulateur de froid.
